# EUROPÄISCHE PATENTSCHRIFT

(11) **EP 0 381 960 B1**
(45) Veröffentlichungstag und Bekanntmachung des Hinweises auf die Patenterteilung: **07.04.1993**
(21) Anmeldenummer: 90100959.7
(22) Anmeldetag: 18.01.1990
(51) Int. Cl.: D01G 27/00, B65G 37/00

(54) **Transporteinrichtung**
Transport device
Dispositif de transport

(30) Priorität: 08.02.1989 CH 431/89
(43) Veröffentlichungstag der Anmeldung: 16.08.1990
(60) Teilanmeldung: 92112087.9
(73) Patentinhaber: MASCHINENFABRIK RIETER AG, CH-8406 Winterthur (CH)
(72) Erfinder: Scheurer, Paul, CH-8450 Andelfingen (CH)

(56) Entgegenhaltungen:
- EP-A- 0 118 600
- FR-A- 1 411 398
- GB-A- 2 153 767
- GB-A- 2 168 938

## Beschreibung

Die Erfindung bezieht sich auf eine Vorrichtung zum gruppenweisen Transport von Wickeln oder leeren Wickelhülsen nach dem Oberbegriff des Hauptanspruches.

Zum Transport von Wattewickeln oder leeren Hülsen in der Kämmerei einer Spinnereianlage sind unterschiedliche Systeme bekannt, wobei die Wattewickel einzeln oder in Gruppen über Förderanlagen an die benötigten Stellen überführt werden. So zeigt z.B. der Zinser "Lap-Lifter 890" ein Transportsystem mittels eines Portalkrans, wobei einzelne, von einer Wikkelmaschine abgegebene Wattewickel, an nachfolgende Kämmaschinen abgegeben werden. Man spricht in diesem Fall von einem "wilden Wechsel". Wie aus dem Prospekt der Firma Zinser "Super-Lap 810" zu entnehmen, versorgt eine wattewickelbildende Maschine mehrere nachfolgende Kämmaschinen.

Diese bekannten Fördereinrichtungen werden über relativ starre und feste Melde- und Befehlsvorgaben gesteuert. Dadurch kann es vorkommen, dass bei einzelnen Kämmaschinen nicht rechtzeitig die Reservewickel zur Verfügung stehen, was somit einen längeren und unerwünschten Stillstand der betreffenden Kämmaschine hervorruft.

Die Erfindung stellt sich somit die Aufgabe, die genannten Nachteile zu beseitigen und die Transporteinrichtung derart auszubilden, dass eine rechtzeitige Nachführung der benötigten Ersatz- Wattewickel an den Kämmaschinen erfolgt.

Diese Aufgabe wird dadurch gelöst, dass die Verschiebung, bzw. Positionierung der Verschiebebrücke über einen Leitrechner gesteuert wird, der mit den wickelverarbeitenden und wickelbildenden Maschinen sowie mit der Verschiebebrücke in Verbindung steht. Dabei ist die Verschiebebrücke mit mindestens einer Schiene versehen, die mit Förderbahnen der wickelverarbeitenden, bzw. wickelbildenden Maschinen zur Überführung einer Gruppe von Wickeln oder Wickelhülsen in eine fluchtende Stellung gebracht werden können.

Durch diese Verknüpfung, über einen Leitrechner, von Transportsystem und den wickelbildenden und wickelverarbeitenden Maschinen ist es möglich, eine fortlaufende Überwachung der Wickelverarbeitung und Wickelbildung zu gewährleisten, wobei das Transportsystem, bzw. die Verschiebebrücke, über den Leitrechner unter Zuhilfenahme einer Positionssensorik logisch positioniert werden kann. Das heisst, die Verschiebebrücke wird über den Leitrechner genau an die Stelle positioniert, wo sie zeitlich ihre nächste Transport-, bzw. Übergabe- oder Abgabefunktion ausführen muss.

Es ist vorteilhaft, den wickelbildenden Maschinen mindestens einen Puffersektor für eine vorgegebene Anzahl von Wickeln zuzuordnen. Dadurch kann jederzeit, selbst wenn momentan noch keine Reservewickel benötigt werden, eine den Kämmköpfen der Kämmaschinen bestimmte Zahl von Wickeln durch die Verschiebebrücke in eine Wartestellung an die Kämmaschine überführt werden, welche entsprechend der Meldung an den Leitrechner als zeitlich nächste Maschine die Nachführung von Reservewickeln benötigt.

Die Anbringung einer weiteren Pufferzone für die leeren Wickelhülsen an den wickelbildenden Maschinen, erhöht die Flexibilität der Verschiebebrücke, da die Rückführung und Abgabe der leeren Wickelhülsen an die wickelbildenden Maschinen gewährleistet ist und somit die Verschiebebrücke wieder frei macht für weitere Transportaufgaben.

Die Verbindung der Pufferzonen und der Sensoren zur direkten Wickelüberwachung mit dem Leitrechner ermöglicht eine exakte, zeitlich abgestimmte Steuerung. Sind mehrere wickelbildenden Maschinen mit wickelverarbeitenden Maschinen in einem Verbundsystem, so ist es von Vorteil, den Leitrechner mit einer Eingabeeinheit zur manuellen Eingabe bestimmter Vorgabewerte zu verbinden. Dies ist insbesondere wichtig, wenn mit unterschiedlichen Mischungen der Wattewickel gearbeitet wird.

Das Verfahren zum gruppenweisen Transport von Wickeln oder leeren Wickelhülsen, wobei die Position der Verschiebebrücke, der Inhalt der Puffer, der Zeitpunkt des letzten Wechselintervalls an den wickelverarbeitenden Maschinen, das jeweilige Sortiment des Wickelmaterials und die Wickelgrösse an der wickelverarbeitenden Maschine für die Steuerung des Transportsystems zugrunde gelegt wird, ergibt eine exakte Abstimmung des gesammten Maschinenverbundes, ohne dass unnötige Zeitverluste und Maschinenstillstände in Kauf genommen werden müssen.

Weitere Vorteile der Erfindung sind anhand eines nachfolgenden Ausführungsbeispieles näher beschrieben und aufgezeigt:

Es zeigt:

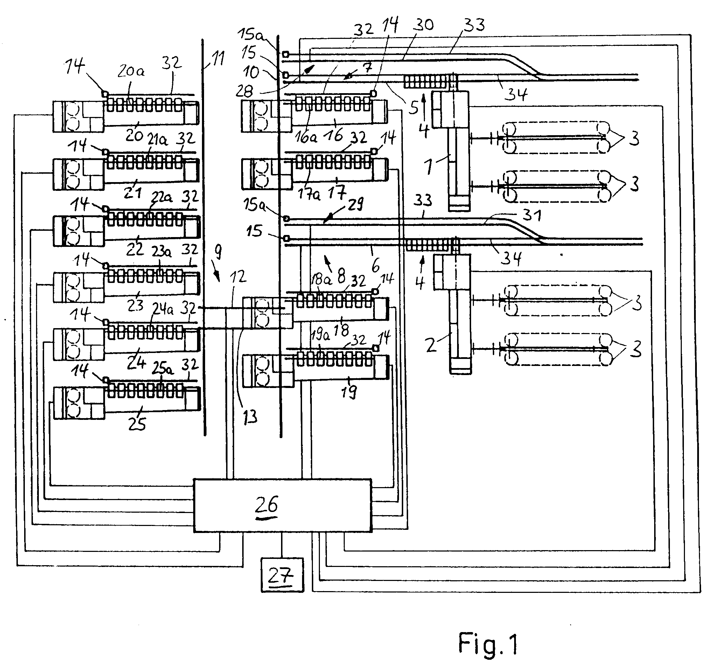

Figur 1 eine schematische Draufsicht auf ein erfindungsgemäss verbundenes Transportsystem.

Die Figur 1 zeigt zwei Wattendoubliermaschinen 1, 2 welche, die aus Kannen 3 abgezogenen Faserbänder doublieren, verstrecken und die dabei gebildete Watte auf eine Hülse aufwickelt. Die so entstandenen Wattewickel 4 werden über nicht näher aufgezeigte Greifer erfasst, über welche die Wickel über Führungsschienen 5, 6 zu einer Pufferstation von 7, 8 überführt werden. Die Verschiebung der Wickel nehmen die Läufer 15 vor, welche auf parallel zu den Führungsschienen 5,6 angeordnete Leitschienen 34 verschiebbar gelagert sind. Diese Pufferstationen 7, 8 stellen gleichzeitig eine Abgabestation für eine nachfolgende Transporteinrichtung dar.

Diese Transporteinrichtung besteht aus einer Verschiebebrücke 9, welche auf den Schienen 10, 11 geführt wird. Die Verschiebebrücke 9 weist einen nicht näher aufgezeigten Fahrantrieb auf. Ausserdem ist die Verschiebebrücke 9 mit zwei Aufnahmeschienen 12, 13 versehen.

Den zwei Wattendoubliermaschinen 1, 2 sind im gezeigten Beispiel zehn Kämmaschinen 16 bis 25 nachgeschaltet, bei welchen die Wattewickel 4 abgerollt, ausgekämmt und nach einem Streckvorgang zu einem Faserband geformt werden. In Verlängerung zu den Aufnahmeschienen 12, 13 der Verschiebebrücke 9, sind die Kämmaschinen 16 bis 25 jeweils mit Schienen 16a bis 25a zur Aufnahme von Wattenwickel 4 oder zur Abgabe von leeren Hülsen ausgestattet. Parallel zu den Schienen 16a bis 25a ist jeweils eine Leitschiene 32 befestigt, welche mit einem Läufer 14 zur Verschiebung der Wattewickel, bzw. der leeren Hülsen versehen sind.

Sämtliche Wattendoubliermaschinen, 1, 2 sowie die Kämmaschinen 16 bis 25 sind über eine Leitung mit einem Leitrechner 26 verbunden. Gleichzeitig besteht eine Verbindung des Leitrechners zu den Antriebselementen der Verschiebebrücke 9. Parallel zu den Führungsschienen 5, 6 der Wattendoubliermaschinen 1, 2 sind Aufnahmeschienen 30, 31 zur Aufnahme und Rückführung der leeren Hülsen vorgesehen. Diese Aufnahmeschienen 30, 31 weisen eine derartige - Länge auf, so dass sie als Leerhülsenpuffer 28, 29 dienen können. Zu den Aufnahmeschienen 30, 31 sind parallel Leitschienen 33 montiert, auf welchen jeweils ein Läufer 15a verschiebbar gelagert ist. Die Läufer 15a sind vorgesehen, um die Leerhülsengruppe von der Aufnahmeschiene 12 oder 13 der Verschiebebrücke 9 abzuziehen und für den Weitertransport auf den Aufnahmeschienen 30, 31 und letztendlich zurück zu den Wattendoubliermaschine 1, 2.

Die Pufferstationen 7, 8, 28, 29 stehen über nicht näher aufgezeigte Sensoren ebenfalls mit dem Leitrechner 26 in Verbindung.

Dem Leitrechner 26 ist ein Schaltpult 27 vorgeschaltet, über welchen der Leitrechner 26 entsprechend eingestellt oder manuell übersteuert werden kann.

Werden z.B. auf den Wattendoubliermaschinen 1, 2 zwei unterschiedliche Mischungen verarbeitet, so können nur die dafür vorgesehenen Kämmaschinen mit ein und derselben Mischung beschickt werden.

Auf jeder Kämmaschine 16 bis 25 sind entsprechende Sensoren angebracht, welche die laufende Überwachung des Wickeldurchmessers vornehmen und entsprechende Signale an den Leitrechner 26 abgeben. Diese Signale werden im Leitrechner 26 gespeichert wobei dieser den Zeitpunkt errechnet, zu welchem spätestens eine Gruppe von Reservewickeln bereitgehalten werden muss.

Ähnlich läuft auch der Vorgang bei den Wattendoubliermaschinen 1, 2 ab, wobei über Sensoren einerseits das Vorhandensein einer vollständigen Gruppe von Wattewickeln dem Leitrechner anzeigt und andererseits die Aufnahmebereitschaft der Leerhülsenpuffer 28, 29 signalisiert. Die Stellung der Position der Verschiebebrücke 9 auf den Schienen 10, 11 wird gleichfalls fortwährend dem Leitrechner 26 übermittelt. Mit den vorliegenden Daten ist es möglich über den Leitrechner 26 unter Berücksichtigung sämtlicher Betriebszustände an den einzelnen Maschinen und unter Beachtung eventuell unterschiedlich zu verarbeitenden Mischungen den Transport der Wattewickel 4 zu den Kämmaschinen 16 bis 25 über eine logisch gesteuerte Verschiebebrücke 9 exakt und ohne Zeitverlust vorzunehmen. Ebenso erfolgt die Rückführung der an den Kämmaschinen abgegebenen Leerhülsen, wobei die Leerhülsen über die Aufnahmeschienen 12 und die Wattewickel über die Aufnahmeschine 13 überführt werden. Die Verschiebung einer Gruppe von Greifern, welche die Wattenwickel oder die leeren Hülsen festhalten, erfolgt durch die Läufer 14 oder 15, 15a.

Die Läufer 14, 15 und 15a können mit einem gesteuerten Eigenantrieb versehen sein, wobei die Steuerung ebenfalls vom Leitrechner 26 aus erfolgen kann.

Es können auch andere bekannte Verschiebeelemente an Stelle der im Beispiel aufgezeigten Läufer vorgesehen sein.

## Patentansprüche

1. Vorrichtung zum gruppenweisen Transport von Wickeln (4) oder leeren Wickelhülsen zwischen mindestens einer wickelbildenden Maschine (1,2) und einer Mehrzahl von wikkelverarbeitenden Maschinen (16-25) über eine mit einem Antrieb versehene Verschiebebrücke (9), welche mit einer Förderbahn, z.B. einer Schiene (12,13) zur Überführung von Wickeln oder Wickelhülsen versehen ist und im wesentlichen quer zu den Längsachsen der wickelverarbeitenden Maschinen verschiebbar ist, dadurch gekennzeichnet, dass die wickelbildenden und wickelverarbeitenden Maschinen jeweils mit mindestens einer Förderbahn, z.B. einer Schiene (16a-25a,5,6) versehen sind, mit welchen die Schiene (12,13) der Verschiebebrücke (9) eine fluchtende Stellung zur Überführung einer Gruppe von Wickeln (4) oder Wickelhülsen einnehmen kann und die Positionierung der Verschiebebrücke mittels einer Positionssensorik über einen Leitrechner (26) entsprechend dem, mittels Sensoren ermittelten Wickelbedarf gesteuert wird, der mit den wickelverarbeitenden Maschinen (16-25) und den wickelbildenden Maschinen (1,2), welche über Sensoren die Anzahl einer in Bereitschaft stehenden Gruppe von Wattewickeln melden, sowie mit der Verschiebebrücke (9) in Verbindung steht.

2. Vorrichtung nach Anspruch 1, dadurch gekennzeichnet, dass die Einspeisslinien (5,6) der wickelbildenden Maschinen (1,2) mindestens einen Puffersektor (7,8) für eine vorgegebene Anzahl von Wickeln (4) aufweist.

3. Vorrichtung nach Anspruch 2, dadurch gekennzeichnet, dass die wickelbildenden Maschinen (1,2) mit einer weiteren Einspeisslinie (30,31) zur Aufnahme der Wickelhülsen versehen sind, deren Länge mindestens die Aufnahme einer vorgegebenen Anzahl von Hülsen ermöglicht.

4. Vorrichtung nach Anspruch 2 oder 3, dadurch gekennzeichnet, dass der Puffersektor (7,8) mit einem mit dem Leitrechner (26) verbundenen Sensor verbunden ist.

5. Vorrichtung nach Anspruch 1, dadurch gekennzeichnet, dass die wickelbildenden (1,2) und die wickelverarbeitenden (16-25) Maschinen mit Sensoren zur laufenden Ermittlung der Wickelgrösse versehen sind und die Sensoren mit dem Leitrechner (26) in Verbindung stehen.

6. Vorrichtung nach Anspruch 1, dadurch gekennzeichnet, dass der Leitrechner (26) mit einer Eingabeeinheit (27) zur manuellen Eingabe bestimmter Vorgabewerte verbunden ist.

7. Vorrichtung nach Anspruch 1, dadurch gekennzeichnet, dass die Verschiebebrücke (9) mit einer Einrichtung zur Positionserfassung versehen ist, welche mit dem Leitrechner (26) in Verbindung steht.

8. Vorrichtung nach Anspruch 1, dadurch gekennzeichnet, dass die Verschiebebrücke (9) mit zwei Aufnahmeschienen (12,13) versehen ist.

9. Vorrichtung nach Anspruch 1, dadurch gekennzeichnet, dass den Schienen (16a-25a) der wickelverarbeitenden Maschinen (16-25) und den Schienen (5,6,30,31) der wikkelbildenden Maschinen (1,2) jeweils parallel dazu ausgerichtete Führungsschienen (32,33,34) zugeordnet sind, weiche jeweils einen verschiebbaren Läufer (14,15,15a) zur Verschiebung von einer Gruppe von Wickeln (4) oder Wickelhülsen auf den Schienen (5,6,30,31,16a-25a) führen.

10. Verfahren zum automatischen Transport von Wickeln (4) oder leeren Wickelhülsen zwischen mindestens einer wikkelbildenden Maschine (1,2) und einer Mehrzahl von wikkelverarbeitenden Maschinen (16-25) über eine mit einem Antrieb versehene Verschiebebrücke (9), welche mit einer Förderbahn, z.B. einer Schiene zur Überführung von Wikkeln (4) oder Wickelhülsen versehen ist und im wesentlichen quer zu den Längsachsen der wickelverarbeitenden Maschinen verschiebbar ist, dadurch gekennzeichnet, dass die Bewegung der Verschiebebrücke (9) bzw. der Wickel (4) oder Hülsen entsprechend dem zeitlichen Wickelbedarf der wickelverarbeitenden Maschinen über einen Leitrechner (26) gesteuert wird, wobei die Förderbahn (12,13) der Verschiebebrücke (9) mit Förderbahnen (16a-25a,5,6) der wickelverarbeitenden und wickelbildenden Maschinen jeweils eine fluchtende Stellung einnehmen kann und der Leitrechner das entsprechende Steuersignal unter Berücksichtigung der folgenden ihm übermittelten Signale errechnet:
a) Position der Verschiebebrücke (9)
b) Anzahl der bereitgestellten Wickel (4) einer Pufferstation (7,8) der wickelbildenden Maschinen
c) Zeitpunkt des letzten Wickelwechsels an den wickelverarbeitenden Maschinen (16-25)
d) Sortiment der Mischung des Wickelmaterials
e) Momentane Wickelgrösse an der wickelverarbeitenden Maschine (16-25).

11. Verfahren nach Anspruch 10, dadurch gekennzeichnet, dass der Leitrechner (26) manuell anwählbar ist.

12. Verfahren, nach Anspruch 11, dadurch gekennzeichnet, dass die Steuerung des Leitrechners (26) manuell übersteuerbar ist.

## Claims

1. Device for the group transport of laps (4) or empty lap tubes between at least one lap forming machine (1,2) and a plurality of lap processing machines (16 - 25) over a gantry (9) provided with a drive which is provided with a conveyor line, e.g. a rail (12, 13) for transfer of laps or lap tubes and which is substantially moveable transversely to the feed lines of the machines, characterized in that the lap forming and the lap processing machines are provided respectively with at least one conveyor line, e.g. a rail (12, 13), at which machines the rail of the gantry (9) can have an aligned position for transfer of a group of laps (4) or lap tubes, and the positioning of the gantry (9) is controlled over a positioning sensor system of a central computer (26) corresponding to the demand of laps determined by means of the sensors, which computer is connected with the lap processing machines (16 - 25) and the lap forming machines (1, 2) which report by sensors the number of a waiting group of laps, as well as with the gantry (9).

2. Device according to claim 1, characterized in that the feed lines (5, 6) of the lap forming machines (1, 2) have at least one buffer sector (7, 8) for a specified number of laps (4).

3. Device according to claim 2, characterized in that the lap forming machines (1, 2) are provided with a further feed line (30, 31) for the reception of lap tubes, the length of which enabling the acceptance of a specified number of tubes.

4. Device according to claim 2 or 3, characterized in that the buffer sector (7, 8) is connected to the central computer (26) with a sensor.

5. Device according to claim 1, characterized in that the lap forming (1, 2) and the lap processing machines (16 - 25) are provided with sensors for the continuous determination of the lap size and the sensors are connected with the central computer (26).

6. Device according to claim 1, characterized in that the central computer (26) is connected with an entry unit (27) for the manual entry of determined standard values.

7. Device according to claim 1, characterized in that the gantry (9) is provided with an arrangement for position registration, which is connected to the central computer (26).

8. Device according to claim 1, characterized in that the gantry (9) is provided with two reception rails (12, 13).

9. Device according to claim 1, characterized in that parallel aligned guiding rails are related to the rails (16a - 25a) of the lap processing machines (16 - 25) and the rails (5, 6, 30, 31) of the lap forming machines (1, 2) respectively, which guide a displaceable slider for displacing of a group of laps (4) or lap tubes on the rails (5, 6, 30, 31).

10. Method for the automatic transport of laps (4) or empty lap tubes between at least one lap forming machine (1, 2) and a plurality of lap processing machines (16 - 25) over a gantry (9) provided with a drive, which is provided with a conveyor line, e.g. a rail for transfer of laps (4) or lap tubes and which is substantially moveable transversely to the longitudinal axis of the lap processing machines, characterized in that the movement of the gantry (9) of the laps (4) or the lap tubes is controlled over a central computer (26) corresponding to chronological demand of laps of the lap processing machines, whereby the conveyor line (16a - 25a, 5, 6) of the lap processing and the lap forming machines can have an aligned position respectively and the central computer calculates the corresponding control signal taking into account the subsequent transmitted signals:
a) position of the gantry (9)
b) number of waiting laps (4) of a buffer station (7, 8) of the lap forming machines
c) moment of latest lap change at the lap processing machines (16 - 25)
d) range of blend of the lap material
e) momentary lap size at the lap processing machine (16 - 25).

11. Method according to claim 10, characterized in that the central computer (26) is selected manually.

12. Method according to claim 11, characterized in that the control of the central computer (26) can be bypassed manually.

## Revendications

1. Dispositif pour transporter, par groupes, des rouleaux (4) ou des tubes de rouleau vides entre au moins une machine (1, 2) formant les rouleaux et une pluralité de machines (16-25) traitant les rouleaux, à l'aide d'un pont roulant (9) pourvu d'une commande, pont roulant qui est pourvu d'un chemin de transport, par exemple un rail (12, 13), pour le transfert de rouleaux ou de tubes de rouleau, et qui est déplaçable d'une manière essentiellement perpendiculaire aux axes longitudinaux des machines traitant les rouleaux,
caractérisé par le fait que
les machines formant les rouleaux et traitant les rouleaux sont pourvues chacune avec au moins un chemin de transport, par exemple un rail (16a-25a, 5, 6), avec lequel le rail (12, 13) du pont roulant (9) peut prendre une position d'alignement pour le transfert d'un groupe de rouleaux (4) ou de tubes de rouleau, et le positionnement du pont roulant est commande à l'aide d'un système détecteur de positionnement, en fonction des besoins en rouleaux déterminés par les détecteurs, via un ordinateur pilote (26) qui est en liaison avec les machines (16-25) traitant les rouleaux et les machines (1, 2) formant les rouleaux, qui annoncent, par des détecteurs, le nombre d'un groupe de rouleaux de nappe en position d'attente, ainsi qu'avec le pont roulant (9).

2. Dispositif selon revendication 1,
caractérisé par le fait que
les lignes d'alimentation (5, 6) des machines (1, 2) formant les rouleaux possèdent au moins un secteur tampon (7, 8) pour un nombre prédéterminé de rouleaux (4).

3. Dispositif selon revendication 2,
caractérisé par le fait que
les machines (1, 2) formant les rouleaux sont pourvues d'une autre ligne d'alimentation (30, 31) pour la réception des tubes de rouleau, ligne dont la longueur permet au moins la réception d'un nombre prédéterminé de tubes.

4. Dispositif selon revendication 2 ou 3,
caractérisé par le fait que
le secteur tampon (7, 8) est relié avec un détecteur qui est relié avec l'ordinateur pilote (26).

5. Dispositif selon revendication 1,
caractérisé par le fait que
les machines (1, 2) formant les rouleaux et les machines (16-25) traitant les rouleaux sont pourvues de détecteurs servant à la détermination continuelle de la grandeur des rouleaux, et les détecteurs sont en liaison avec l'ordinateur pilote (26).

6. Dispositif selon revendication 1,
caractérisé par le fait que
l'ordinateur pilote (26) est relié avec une unité d'introduction (27) servant à l'introduction manuelle de valeurs allouées prédéterminées.

7. Dispositif selon revendication 1,
caractérisé par le fait que
le pont roulant (9) est pourvu d'un arrangement servant à enregistrer le positionnement, arrangement qui est relié avec l'ordinateur pilote (26).

8. Dispositif selon revendication 1,
caractérisé par le fait que
le pont roulant (9) est pourvu de deux rails de réception (12, 13).

9. Dispositif selon revendication 1,
caractérisé par le fait que
des rails de guidage (32, 33, 34) sont adjoints d'une mannière parallèle aux rails (16a-25a) des machines (16-25) traitant les rouleaux ainsi qu'aux rails (5, 6, 30, 31) des machines (1, 2) formant les rouleaux, rails qui guident chacun un curseur déplaçable (14, 15, 15a) servant au déplacement d'un groupe de rouleaux (4) ou de tubes de rouleau sur les rails (5, 6, 30, 31, 16a-25a).

10. Procédé pour le transport automatique de rouleaux (4) ou de tubes de rouleau vides entre au moins une machine (1, 2) formant les rouleaux et une pluralité de machines (16-25) traitant les rouleaux, à l'aide d'un pont roulant (9) pourvu d'une commande, pont roulant qui est pourvu d'un chemin de transport, par exemple un rail, pour le transfert de rouleaux (4) ou de tubes de rouleau, et qui est déplaçable d'une manière essentiellement perpendiculaire aux axes longitudinaux des machines traitant les rouleaux,
caractérisé par le fait que
le mouvement du pont roulant (9) respectivement des rouleaux (4), ou des tubes, est commandé via un ordinateur pilote (26), en fonction des besoins instantanés en rouleaux des machines traitant les rouleaux, et où le chemin de transport (12, 13) du pont roulant (9) peut prendre une position d'alignement avec les chemins de transport (16a-25a, 5, 6) des machines traitant les rouleaux respectivement des machines formant les rouleaux, et l'ordinateur pilote déduit par le calcul le signal de commande correspondant, en considération des signaux suivants qui lui ont été transmis:
a) Position du pont roulant (9)
b) Nombre des rouleaux (4) mis en position d'attente dans un secteur tampon (7, 8) des machines formant les rouleaux
c) Moment du dernier changement de rouleaux dans les machines (16-25) traitant les rouleaux
d) Assortiment du mélange de la matière du rouleau
e) Grandeur momentanée des rouleaux dans la machine (16-25) traitant les rouleaux.

11. Procédé selon revendication 10,
caractérisé par le fait que
l'ordinateur pilote (26) peut être sélectionné manuellement.

12. Procédé selon revendication 11,
caractérisé par le fait que
la commande de l'ordinateur pilote (26) peut être surmodulée manuellement.
